## Europäisches Patentamt

(19) **European Patent Office**

**Office européen des brevets**

(11) Veröffentlichungsnummer: **0 132 836**
**B1**

(12) # EUROPÄISCHE PATENTSCHRIFT

(45) Veröffentlichungstag der Patentschrift:
**28.10.87**

(51) Int. Cl.⁴: **H 04 L 11/00**

(21) Anmeldenummer: **84108751.3**

(22) Anmeldetag: **24.07.84**

---

(54) **Verfahren und Schaltungsanordnung zur Steuerung der Verarbeitung von Signalisierungsinformationen.**

---

(30) Priorität: **27.07.83 DE 3327079**

(43) Veröffentlichungstag der Anmeldung:
**13.02.85 Patentblatt 85/7**

(45) Bekanntmachung des Hinweises auf die Patenterteilung:
**28.10.87 Patentblatt 87/44**

(84) Benannte Vertragsstaaten:
**AT BE CH DE FR GB IT LI NL SE**

(56) Entgegenhaltungen:
**EP - A - 0 037 074**
**DE - B - 2 813 961**

**SIEMENS REVIEW, Band 44, Nr. 7, Juli 1977, Seiten 295-301, Erlangen, DE; E. MAIR et al.: "The structure of the Siemens EDS system"**

(73) Patentinhaber: **Siemens Aktiengesellschaft Berlin und München, Wittelsbacherplatz 2, D-8000 München 2 (DE)**

(72) Erfinder: **Lochow, Hans-Joachim, Ing. grad., Schumannstrasse 26, D-8011 Baldham (DE)**

---

## Beschreibung

Die Erfindung betrifft ein Verfahren und eine Schaltungsanordnung zur Steuerung der Verarbeitung von einer Fernschreib- und Datenvermittlungsstelle über Leitungsabschnitte zum Zwecke des Aufbaues von Verbindungen zugeführten Signalisierungsinformationen, die über zu zwei verschiedenen Gruppen von Leitungsabschnitten gehörende Leitungsabschnitte übertragen werden, auf denen unterschiedliche Übertragungsprozeduren abgewickelt werden, wobei in der Fernschreib- und Datenvermittlungsstelle die Anzahl der über die zu den beiden Gruppen von Leitungsabschnitten übertragenen, innerhalb einer vorgegebenen Zeitspanne verarbeitbaren Signalisierungsinformationen festlegbar ist.

Es ist allgemein üblich, in mit verschiedenen Gruppen von Leitungsabschnitten verbundenen Fernschreib- und Datenvermittlungsstellen die Anzahl der innerhalb einer vorgegebenen Zeitspanne für die verschiedenen Gruppen von Leitungsabschnitten verarbeitbaren Signalisierungsinformationen fest vorzugeben (vgl.z.B. Siemens Review, Bd. 44, Nr. 7, Juli 1977, S. 295 bis 301). Dabei wird nicht berücksichtigt, dass das Verkehrsaufkommen innerhalb der einzelnen Gruppen von Leitungsabschnitten bedingt durch das Teilnehmerverhalten stark schwankt. So ist es beispielsweise möglich, dass zu einem bestimmten Zeitpunkt das Verkehrsaufkommen in einer der Gruppen von Leitungsabschnitten ein Maximum einnimmt, während eine weitere Gruppe von Leitungsabschnitten gerade zu diesem Zeitpunkt ein minimales Verkehrsaufkommen aufweist. Obwohl für die Verarbeitung der über diese weitere Gruppe von Leitungsabschnitten übertragenen Signalisierungsinformationen die für diese weitere Gruppe reservierte Vermittlungskapazität nur zum Teil ausgenutzt wird, ist diese freie Vermittlungskapazität durch die feste Vorgabe der für die einzelnen Gruppen in einer vorgegebenen Zeitspanne verarbeitbaren Signalisierungsinformationen für eine andere Gruppe von Leitungsabschnitten nicht nutzbar.

Der vorliegenden Erfindung liegt nun die Aufgabe zugrunde, einen Weg zu zeigen, wie auf relativ einfache Weise die Verarbeitung der über verschiedene Gruppen von Leitungsabschnitten übertragenen Signalisierungsinformationen unter Berücksichtigung der Verkehrsverhältnisse in einer Fernschreib- und Datenvermittlungsstelle gesteuert werden kann.

Gelöst wird die vorstehend aufgezeigte Aufgabe erfindungsgemäss dadurch, dass die auf den Leitungsabschnitten auftretenden Signalisierungsinformationen, in der Fernschreib- und Datenvermittlungsstelle nach ihrer Herkunft über Leitungsabschnitte der einen bzw. der anderen Gruppe von Leitungsabschnitten getrennt erfasst werden, dass zumindest die über Leitungsabschnitte der einen Gruppe von Leitungsabschnitten übertragenen Signalisierungsinformationen vor ihrer Verarbeitung zunächst gespeichert werden, dass die Anzahl der von der Fernschreib-

und Datenvermittlungsstelle innerhalb einer vorgegebenen Zeitspanne über Leitungsabschnitte der anderen Gruppe von Leitungsabschnitten aufgenommenen Signalisierungsinformationen ermittelt wird, dass anhand dieser Anzahl die innerhalb einer solchen Zeitspanne noch für die Verarbeitung weiterer Signalisierungsinformationen zur Verfügung stehende Zeit ermittelt wird und dass innerhalb einer solchen vorgegebenen Zeitspanne die ermittelte Anzahl der über Leitungsabschnitte der genannten anderen Gruppe von Leitungsabschnitten übertragenen Signalisierungsinformationen und eine der ermittelten Zeit entsprechende Anzahl der über Leitungsabschnitte der genannten einen Gruppe von Leitungsabschnitten übertragenen Signalisierungsinformationen verarbeitet werden.

Die Erfindung bringt den Vorteil mit sich, dass die in einer mit Gruppen von Leitungsabschnitten verbundenen Fernschreib- und Datenvermittlungsstelle für die Verarbeitung von Signalisierungsinformationen zur Verfügung stehende Vermittlungskapazität auf die Gruppen von Leitungsabschnitten nicht fest, sondern in Abhängigkeit vom Verkehrsaufkommen in einer der Gruppen flexibel aufgeteilt wird. Auf diese Weise ist es beispielsweise möglich, bei in den Gruppen von Leitungsabschnitten zeitlich versetzt auftretenden maximalen Verkehrsbelastungen die in der Fernschreib- und Datenvermittlungsstelle zur Verfügung stehende Vermittlungskapazität fast ausschliesslich durch die eine oder die andere Gruppe von Leitungsabschnitten auszunutzen.

Eine Schaltungsanordnung zur Durchführung des erfindungsgemässen Verfahrens ergibt sich aus den Unteransprüchen.

Anhand einer Zeichnung wird die Erfindung nachstehend beispielsweise näher erläutert.

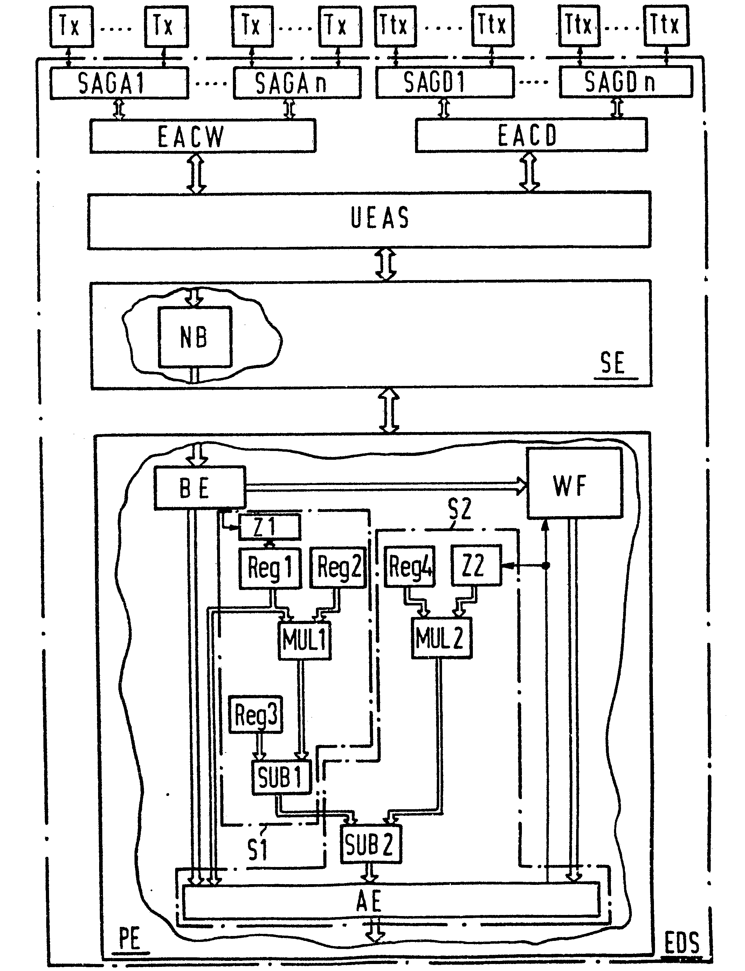

In der Zeichnung ist das Blockschaltbild einer Fernschreib- und Datenvermittlungsstelle EDS dargestellt. Diese Fernschreib- und Datenvermittlungsstelle weist verschiedene Leitungsanschlussgruppen SAGA1 bis SAGAn und SAGD1 bis SAGDn auf. Die Leitungsanschlussgruppen SAGA1 bis SAGAn mögen dabei beispielsweise mit Leitungsabschnitten verbunden sein, auf denen jeweils eine asynchrone Übertragungsprozedur, wie sie beispielsweise bei der Übertragung von Fernschreibsignalen verwendet wird, abgewickelt wird. In der Zeichnung ist dargestellt, dass an diese Leitungsabschnitte mit Tx bezeichnete Fernschreib- oder Telex-Endgeräte angeschlossen sind. Bei diesen Leitungsabschnitten kann es sich aber auch um Verbindungsleitungen zwischen zwei Fernschreib- und Datenvermittlungsstellen handeln.

Die Leitungsanschlussgruppen SAGD1 bis SAGDn mögen dagegen mit Leitungsabschnitten verbunden sein, auf denen jeweils eine synchrone Übertragungsprozedur abgewickelt wird. An diese Leitungsabschnitte können, wie in der Zeichnung dargestellt, mit Ttx bezeichnete Bürofernschreib-Endgeräte, die auch als Teletex-Endgeräte bezeichnet werden, oder weitere Fernschreib- und Datenvermittlungsstellen angeschlossen sein. Die für die Datensignalübertragung in öffentlichen Vermittlungsnetzen anzuwendenden synchronen Übertragungsprozeduren sind beispielsweise durch die CCITT-Empfehlungen X.21 und X.71 festgelegt. Die Übertragung der Datensignale von bzw. zu einer Fernschreib- und Datenvermittlungsstelle erfolgt dabei in Form von auch als Envelopes bezeichneten Signalgruppen.

Die genannten Leitungsanschlussgruppen, die zur Aufnahme und Abgabe von mit einer asynchronen bzw. synchronen Übertragungsprozedur übertragenen Signalen dienen, sind jeweils mit einem Eingabe-/Ausgabe-Codewandler EACW bzw. EACD verbunden. Die Aufgabe dieser Eingabe-/Ausgabe-Codewandler besteht unter anderem darin, über die einzelnen Leitungsanschlussgruppen zugeführte Signale zu dem eigentlichen Verarbeitungsteil der Fernschreib- und Datenvermittlungsanlage EDS weiterzuleiten bzw. von diesem Verarbeitungsteil her über die Leitungsanschlussgruppen abzugebende Signale weiterzuleiten. Hierzu sind die Eingabe-/Ausgabe-Codewandler an einer Übertragungsablaufsteuerung UEAS angeschlossen. Diese Übertragungsablaufsteuerung steuert einerseits das Eintragen der ihr von den Eingabe-/Ausgabe-Codewandlern zugeführten Signale in einen Datenspeicher NB einer mit der Übertragungsablaufsteuerung verbundenen Speichereinheit SE. Andererseits leitet die Übertragungsablaufsteuerung UEAS in der Speichereinheit SE für die Abgabe an die Leitungsabschnitte bereitstehende Datensignale an die Eingabe-/Ausgabe-Codewandler weiter. Der Eintrag von Signalen in den Datenspeicher NB erfolgt im übrigen in der Reihenfolge des Auftretens dieser Signale. Der Datenspeicher kann hierzu als sogenannter FIFO-Speicher (Durchlaufspeicher) organisiert sein.

Mit der genannten Speichereinheit SE ist eine Programmsteuereinheit PE verbunden, die die der Fernschreib- und Datenvermittlungsstelle EDS zugeführten Signale bzw. von dieser abzugebende Signale verarbeitet. Von dieser Programmsteuereinheit sind in der Zeichnung lediglich die Schaltungsteile dargestellt, die der Steuerung der Verarbeitung von Signalisierungsinformationen dienen, welche von der Fernschreib- und Datenvermittlungsstelle zum Zwecke des Aufbaues von Verbindungen über die bereits genannten Leitungsabschnitte aufgenommen werden. Unter Signalisierungsinformationen sollen hierbei Rufsignale für den Aufbau abgehender Verbindungen verstanden werden. Diese Rufsignale werden vor ihrem Eintrag in den Datenspeicher NB der Speichereinheit SE gesondert gekennzeichnet. Aus diesem Kennzeichen geht auch hervor, von welcher Gruppe von Leitungsabschnitten das jeweilige Rufsignal aufgenommen worden ist. Bei dem hier erläuterten Ausführungsbeispiel sind zwei Gruppen von Leitungsabschnitten vorgesehen, die sich in den auf den Leitungsabschnitten für die Übertragung von Signalen verwendeten Übertragungsprozeduren unterscheiden.

Die Programmsteuereinheit PE weist zur Steuerung der Verarbeitung von Signalisierungsinformationen eine Bewertungseinrichtung BE auf. In dieser Bewertungseinrichtung werden die nacheinander dem Datenspeicher NB der Speichereinheit SE entnommenen Rufsignale nach ihrer Herkunft über Leitungsabschnitte der einen bzw. anderen Gruppe von Leitungsabschnitten getrennt. Die Bewertungseinrichtung ist hierzu ausgangsseitig mit einer Auswahleinrichtung AE und mit einer Speicheranordnung WF verbunden. In dieser Speicheranordnung werden zunächst die Rufsignale vor ihrer Verarbeitung zwischengespeichert, die auf mit einer synchronen Übertragungsprozedur arbeitenden Leitungsabschnitten übertragen worden sind. Die übrigen Rufsignale werden der gerade genannten Auswahleinrichtung AE zur Verarbeitung zugeführt.

Die Bewertungseinrichtung BE ist ausgangsseitig ausserdem mit einer Zähleranordnung Z1 einer ersten Steuereinrichtung S1 verbunden. In dieser Zähleranordnung Z1 wird die Anzahl der innerhalb einer vorgegebenen Zeitspanne an die Auswahleinrichtung AE abgegebenen Rufsignale ermittelt. Bei dem hier erläuterten Ausführungsbeispiel wurde als Zeitspanne eine Minute gewählt. Nach Ablauf dieser Zeitspanne wird der aktuelle Zählerstand in ein der Zähleranordnung Z1 nachgeschaltetes Register Reg1 übernommen. Nach der Übernahme dieses Zählerstandes wird die Zählanordnung Z1 in ihre Grundstellung zurückgesetzt, um die Anzahl der an die Auswahleinrichtung in der nachfolgenden Minute abgegebenen Rufsignale zu ermitteln. Der in dem Register Reg1 gespeicherte Zählerstand wird in einem dem Register nachgeschalteten Multiplizierer MUL1 mit einem Zeitsignal multipliziert, welches der Verarbeitungszeit eines Rufsignals entspricht, das über ein mit einer asynchronen Übertragungsprozedur arbeitenden Leitungsabschnitt übertragen wird. Dieses Zeitsignal ist in einem Register Reg2 gespeichert, welches mit seinem Ausgang mit dem Multiplizierer MUL1 verbunden ist. Der Multiplizierer gibt an seinem Ausgang ein Zeitsignal ab, das der Verarbeitungszeit der in der Zähleranordnung Z1 ermittelten Anzahl von Rufsignalen entspricht.

Der Multiplizierer MUL1 ist ausgangsseitig mit einem Subtrahierer SUB1 verbunden. An diesen Subtrahierer ist eingangsseitig ausserdem ein Register Reg3 angeschlossen, in dem ein weiteres Zeitsignal gespeichert ist. Dieses Zeitsignal gibt innerhalb der vorgegebenen Zeitspanne die für die Verarbeitung von Rufsignalen insgesamt zur Verfügung stehende Zeit an. An seinem Ausgang gibt der Subtrahierer SUB1 entsprechend der ihm zugeführten Signale ein Zeitsignal ab, das der innerhalb der vorgegebenen Zeitspanne noch für die Verarbeitung weiterer Rufsignale zur Verfügung stehenden Zeit entspricht.

Die Programmsteuereinheit PE weist eine zweite Steuereinrichtung S2 auf, zu der die bereits erwähnte Auswahleinrichtung AE gehört. Diese Auswahleinrichtung übernimmt nur dann von den in der Speicheranordnung WF gespeicherten Rufsignalen (Signalisierungsinformationen) eine bestimmte Anzahl, wenn die für die Verarbeitung dieser Anzahl erforderliche Zeit innerhalb der von dem Subtrahierer SUB1 für die Verarbeitung weiterer Rufsignale ermittelten Zeit liegt. Für die Übernahme der Rufsignale ist die Auswahleinrichtung AE mit dem Datenausgang und mit einem Steuereingang der Speicheranordnung WF verbunden. Die Speicheranordnung kann wie der Datenspeicher NB der Speichereinheit SE als FIFO-Speicher (Durchlaufspeicher) ausgelegt sein. Für die Übernahme von Rufsignalen werden dem Steuereingang der Speicheranordnung WF entsprechende Steuersignale zugeführt. Die Übernahme der Rufsignale kann dabei in der Weise erfolgen, dass in zeitlich konstanten Abständen innerhalb der vorgegebenen Zeitspanne eine vorgegebene Anzahl von zwischengespeicherten Rufsignalen ausgelesen wird. Die dazu innerhalb der vorgegebenen Zeitspanne dem Steuereingang der Speicheranrodnung WF zugeführten Steuersignale werden in einer Zähleranordnung Z2 der Steuereinrichtung S2 gezählt. Der aktuelle Zählerstand dieser Zähleranordnung wird in einem dieser nachgeschalteten Multiplizierer MUL2 mit einem in einem Register Reg4 gespeicherten Zeitsignal multipliziert, welches der Verarbeitungszeit eines auf einem mit einer synchronen Übertragungsprozedur arbeitenden Leitungsabschnitt übertragenen Rufsignal entspricht.

Der Multiplizierer MUL2 ist mit einem Eingang eines Subtrahierers SUB2 verbunden. An einem weiteren Eingang erhält dieser Subtrahierer das von dem Subtrahierer SUB1 der ersten Steueranordnung S1 abgegebene Zeitsignal zugeführt. An seinem Ausgang gibt der Subtrahierer SUB2 ein der noch für die Verarbeitung weiterer, in der Speicheranordnung WF zwischengespeicherter Rufsignale verbleibenden Zeit entsprechendes Zeitsignal ab. Dieses Zeitsignal erhält dann die bereits oben erwähnte Auswahleinrichtung AE zugeführt. Die Auswahleinrichtung gibt immer nur dann eine Anzahl von Steuersignalen an die Speicheranordnung WF ab, wenn sich aufgrund des von dem Subtrahierer SUB2 abgegebenen Zeitsignals ergibt, dass noch ein oder mehrere Rufsignale innerhalb der vorgegebenen Zeitspanne verarbeitet werden können.

Wie bereits oben erwähnt, erhält die Auswahleinrichtung AE von der Bewertungseinrichtung BE einen Teil der Rufsignale direkt zugeführt. Bei diesem Teil handelt es sich um Rufsignale, die über mit einer asynchronen Übertragungsprozedur arbeitende Leitungsabschnitte übertragen worden sind. Die Auswahleinrichtung verarbeitet von diesen Rufsignalen innerhalb einer durch das Auftreten zweier aufeinanderfolgender, von dem Subtrahierer SUB2 abgegebener Zeitsignale festgelegten Zeitspanne lediglich eine dem in dem Register Reg1 gespeicherten Zählerstand entsprechende Anzahl. Die übrigen Rufsignale werden bis zu ihrer Verarbeitung zwischengespeichert. Für diese Auswahl kann die Auswahleinrichtung AE eine hier nicht näher dargestellte, als FIFO-Speicher organisierte Speicheranordnung aufweisen, der eine in dem Register Reg1 gespeicherten Zählerstand entsprechende Anzahl von Rufsignalen entnommen wird. Die Auswahleinrichtung ist dazu für die Übernahme des aktuellen Zählerstandes mit dem Ausgang des Registers Reg1 verbunden.

Die zuletzt genannte Speicheranordnung und die bereits erwähnte Speicheranordnung WF können für das Auslesen der innerhalb der vorgegebenen Zeitspanne zu berücksichtigenden Rufsignale innerhalb einer solchen Zeitspanne zeitlich versetzt in vorgegebenen Abständen durch entsprechende Steuersignale angesteuert werden. Auf diese Weise wird eine annähernd kontinuierliche Verarbeitung der in den beiden Gruppen von Leitungsabschnitten übertragenen Rufsignale erreicht.

Die Auswahleinrichtung AE kann aber auch so ausgebildet sein, dass sie eine dem in dem Register Reg1 gespeicherten Zählstand entsprechende Anzahl von Rufsignalen ohne vorherige Zwischenspeicherung verarbeitet. Über diese Anzahl hinaus von der Bewertungseinrichtung BE übernommene Rufsignale bleiben dagegen unberücksichtigt. Eine annähernd kontinuierliche Verarbeitung der in der Speicheranordnung WF gespeicherten Rufsignale wird hier wieder dadurch erreicht, dass dieser Speicheranordnung innerhalb der vorgegebenen Zeitspanne in bestimmten Abständen Rufsignale zur Verarbeitung entnommen werden.

**Patentansprüche**

1. Verfahren zur Steuerung der Verarbeitung von einer Fernschreib- und Datenvermittlungsstelle (EDS) über Leitungsabschnitte zum Zwecke des Aufbaues von Verbindungen zugeführten Signalisierungsinformationen, die über zu zwei verschiedenen Gruppen von Leitungsabschnitten gehörende Leitungsabschnitte übertragen werden, auf denen unterschiedliche Übertragungsprozeduren abgewickelt werden, wobei in der Fernschreib- und Datenvermittlungsstelle die Anzahl der über die zu den beiden Gruppen von Leitungsabschnitten übertragenen, innerhalb einer vorgegebenen Zeitspanne verarbeitbaren Signalisierungsinformationen festlegbar ist, dadurch gekennzeichnet, dass die auf den Leitungsabschnitten auftretenden Signalisierungsinformationen in der Fernschreib- und Datenvermittlungsstelle nach ihrer Herkunft über Leitungsabschnitte der einen bzw. der anderen Gruppe von Leitungsabschnitten getrennt erfasst werden, dass zumindest die über Leitungsabschnitte der einen Gruppe von Leitungsabschnitten übertragenen Signalisierungsinformationen vor ihrer Verarbeitung zunächst gespeichert werden, dass die Anzahl der von der Fernschreib- und Datenvermittlungsstelle innerhalb einer vorgegebenen Zeitspanne über Leitungsabschnitte der anderen Gruppe von Leitungsabschnitten aufgenommenen Signalisierungsinformationen ermittelt wird, dass anhand dieser Anzahl die innerhalb einer solchen Zeitspanne noch für die Verarbeitung weiterer Signalisierungsinformationen zur Verfügung stehende Zeit ermittelt wird, und dass innerhalb einer solchen vorgegebenen Zeitspanne die ermittelte Anzahl der über Leitungsabschnitte der genannten anderen Gruppe von Leitungsabschnitten übertragenen Signalisierungsinformationen und eine der ermittelten Zeit entsprechende Anzahl der über Leitungsabschnitte der genannten einen Gruppe von Leitungsabschnitten übertragenen Signalisierungsinformationen verarbeitet werden.

2. Schaltungsanordnung zur Durchführung des Verfahrens nach Anspruch 1, dadurch gekennzeichnet, dass die Fernschreib- und Datenvermittlungsstelle (EDS) eine Bewertungseinrichtung (BE) aufweist, welche die über die Leitungsabschnitte übertragenen Signalisierungsinformationen nach ihrer Herkunft über Leitungsabschnitte der einen bzw. der anderen Gruppe von Leitungsabschnitten zu trennen gestattet, dass eine Speicheranordnung (WF) zumindest für die Speicherung der über Leitungsabschnitte der einen Gruppe von Leitungsabschnitten übertragenen Signalisierungsinformationen vor deren Verarbeitung vorgesehen ist, dass eine erste Steuereinrichtung (S1) vorgesehen ist, welche die Anzahl der von der Fernschreib- und Datenvermittlungsstelle innerhalb einer vorgegebenen Zeitspanne über Leitungsabschnitte der anderen Gruppe von Leitungsabschnitten aufgenommenen Signalisierungsinformationen ermittelt und welche anhand dieser Anzahl die innerhalb einer solchen Zeitspanne noch für die Verarbeitung weiterer Signalisierungsinformationen zur Verfügung stehende Zeit ermittelt, und dass eine zweite Steuereinrichtung (S2) vorgesehen ist, die innerhalb einer solchen vorgegebenen Zeitspanne eine der ermittelten Anzahl entsprechende Anzahl der über Leitungsabschnitte der anderen Gruppe von Leitungsabschnitten übertragenen Signalisierungsinformationen und eine der ermittelten Zeit entsprechende Anzahl der über Leitungsabschnitte der einen Gruppe von Leitungsabschnitten übertragenen Signalisierungsinformationen zu verarbeiten gestattet.

3. Schaltungsanordnung nach Anspruch 2, dadurch gekennzeichnet, dass die erste Steuereinrichtung (S1) eine Zähleranordnung (Z1) für die Ermittlung der in der vorgegebenen Zeitspanne von der Fernschreib- und Datenvermittlungsstelle über Leitungsabschnitte der genannten anderen Gruppe von Leitungsabschnitten aufgenommenen Signalisierungsinformationen aufweist, dass die Zähleranordnung für die Abgabe eines dieser Anzahl der Signalisierungsinformationen entsprechenden Zählersignals mit einem ersten Register (Reg1) verbunden ist, dass dieses Register ausgangsseitig mit einem Multiplizierer (MUL1) verbunden ist, welcher das ihm zugeführte Zählersignal mit einem in einem zweiten Register (Reg2) gespeicherten Zeitsignal multipliziert, das der Verarbeitungszeit für eine über Leitungsabschnitte der anderen Gruppe von Leitungsabschnitten übertragenen Signalisierungsinformation entspricht, und dass das von dem Multiplizierer abgegebene Zeitsignal ein Subtrahierer (SUB1) zugeführt erhält, welcher aus diesem Zeitsignal und aus einem der insgesamt innerhalb der vorgegebenen Zeitspanne für die Verarbeitung von Signalisierungsinformationen zur Verfügung stehenden Zeit entsprechenden, in einem dritten Register (Reg3) gespeicherten Zeitsignal die noch für die Verarbeitung weiterer Signalisierungsinformationen zur Verfügung stehende Zeit ermittelt und ein dieser Zeit entsprechendes Zeitsignal der Fernschreib- und Datenvermittlungsstelle (EDS) bereitstellt.

4. Schaltungsanordnung nach Anspruch 3, dadurch gekennzeichnet, dass die zweite Steuereinrichtung (S2) für die Weiterleitung der über Leitungsabschnitte der beiden Gruppen von Leitungsabschnitten übertragenen Signalisierungsinformationen eine Auswahleinrichtung (AE) aufweist, welche immer dann von den in der Speicheranordnung (WF) gespeicherten Signalisierungsinformationen eine vorgegebene Anzahl übernimmt, wenn die für die Verarbeitung dieser Anzahl erforderliche Zeit innerhalb der noch für die Verarbeitung weiterer Signalisierungsinformationen zur Verfügung stehenden Zeit liegt, dass für die Ermittlung dieser für die Verarbeitung erforderlichen Zeit eine Zähleranordnung (Z2) vorgesehen ist, deren Zählerstand bei einer Übernahme einer in der Speicheranordnung gespeicherten Signalisierungsinformation in die Auswahleinrichtung verändert wird, dass die Zähleranordnung für die Abgabe eines ihrem Zählerstand entsprechenden Zählersignals mit einem Multiplizierer (MUL2) verbunden ist, welcher dieses Zählersignal mit einem in einem vierten Register (Reg4) gespeicherten Zeitsignal multipliziert, das der Verarbeitungszeit für eine über Leitungsabschnitte der genannten einen Gruppe von Leitungsabschnitten übertragenen Signalisierungsinformationen entspricht, und dass das daraus resultierende, von dem Multiplizierer abgegebene Zeitsignal ein Subtrahierer (SUB2) zugeführt erhält, welcher aus diesem Zeitsignal und aus dem von dem Subtrahierer (SUB1) der ersten Steuereinrichtung (S1) abgegebenen Zeitsignal ein der noch für die Verarbeitung weiterer Signalisierungsinformationen verbleibenden Zeit entsprechendes Zeitsignal an die Auswahleinrichtung (AE) abgibt.

**Revendications**

1. Procédé pour commander le traitement d'informations de signalisation, amenées par des tronçons de lignes à un centre Télex et de transmission de données (EDS), dans le but de l'établissement de communications, informations qui sont transmises par des tronçons de lignes appartenant à deux groupes différents de tronçons de lignes, sur lesquels sont effectuées des procédures de transmission différentes, avec la possibilité de déterminer, au centre Télex et de transmission de données, le nombre des informations de signalisation, transmises aux deux groupes de tronçons de lignes, pouvant être traitées dans un intervalle de temps préfixé, caractérisé en ce que les informations de signalisation apparaissant sur les tronçons de lignes sont détectées séparément, au centre Télex et de transmission de données, selon leur provenance, par des tronçons de lignes de l'un ou de l'autre groupe de tronçons de lignes, qu'au moins les informations de signalisation transmises par un groupe de tronçons de lignes sont d'abord mémorisées, avant leur traitement, qu'il est déterminé le nombre des informations de signalisation reçues par le centre Télex et de transmission de données, dans un intervalle de temps préfixé, par des tronçons de lignes de l'autre groupe de tronçons de lignes, qu'il est déterminé, d'après ce nombre, le temps encore disponible, dans un tel intervalle de temps, pour le traitement d'autres informations de signalisation et que sont traités, dans un tel intervalle de temps préfixé, le nombre déterminé des informations de signalisation transmises par des tronçons de lignes dudit autre groupe, de même qu'un nombre d'informations de signalisation, transmises par des tronçons de lignes du groupe mentionné en premier, qui correspond au temps disponible déterminé.

2. Montage pour la mise en œuvre du procédé selon la revendication 1, caractérisé en ce que le centre Télex et de transmission de données (EDS) présente un dispositif d'évaluation (BE) qui permet de separer les informations de signalisation, transmises par les tronçons de lignes, d'après leur provenance, par l'un ou par l'autre groupe de tronçons de lignes, qu'il est prévu un dispositif de mémoire (WF) pour mémoriser au moins, avant leur traitement, les informations des signalisation transmises par des tronçons de lignes dudit premier groupe, qu'il est prévu un premier dispositif de commande (S1) qui détermine le nombre des informations de signalisation reçues par le centre Télex et de transmission de données, dans un intervalle de temps préfixé, par des tronçons de lignes de l'autre groupe et qui détermine, d'après ce nombre, le temps encore disponible, dans un tel intervalle, pour le traitement d'autres informations de signalisation, et qu'il est prévu un deuxième dispositif de commande (S2) qui permet de traiter, dans un tel intervalle préfixé, un nombre, correspondant au nombre déterminé, d'informations de signalisation transmises par des tronçons de lignes de l'autre groupe, de même qu'un nombre d'informations de signalisation, transmises par des tronçons de lignes dudit premier groupe, qui correspond au temps disponible déterminé.

3. Montage selon la revendication 2, caractérisé en ce que le premier dispositif de commande (S1) présente un dispositif de comptage (Z1) pour déterminer le nombre des informations de signalisation reçues par le centre Télex et de transmission de données, dans l'intervalle de temps préfixé, par des tronçons de lignes dudit autre groupe, que le dispositif de comptage est connecté à un premier registre (Reg1) pour la délivrance d'un signal de compteur correspondant à ce nombre d'informations de signalisation, que la sortie de ce registre est connectée à un multiplicateur (MUL1) qui multiplie le signal de compteur qui lui est fourni par un signal de temps, mémorisé dans un second registre (Reg2) et qui correspond au temps de traitement pour une information de signalisation transmise par des tronçons de lignes de l'autre groupe, et que le signal de temps délivré par le miltiplicateur est appliqué à un soustracteur (SUB1) qui détermine, à partir de ce signal de temps et d'un signal de temps, mémorisé dans un troisième registre (Reg3) et correspondant au temps global disponible, dans l'intervalle de temps préfixé, pour le traitement d'informations de signalisation, le temps qui est encore disponible pour le traitement d'autres informations de signalisation et qui fournit au centre Télex et de transmission de données (EDS) un signal de temps qui correspond à ce temps.

4. Montage selon la revendication 3, caractérisé en ce que le deuxième dispositif de commande (S2) présente, pour la retransmission d'informations de signalisation transmises par des tronçons de lignes des deux groupes, un dispositif de sélection (AE) qui reprend un nombre prédéterminé d'informations de signalisation, parmi celles mémorisées dans le dispositif de mémorisation (WF), lorsque le temps nécessaire au traitement de ce nombre est compris dans le temps encore disponible pour le traitement d'autres informations de signalisation, qu'il est prévu un dispositif de comptage (Z2) pour déterminer le temps nécessaire au traitement de ce nombre d'informations, dispositif dont la position de comptage est changée lors de la reprise d'une information de signalisation mémorisée dans le dispositif de mémorisation par le dispositif de sélection, que le dispositif de comptage est connecté, pour la délivrance d'un signal de comptage correspondant à sa position de comptage, à un mulitplicateur (MUL2) qui multiplie ce signal de comptage par un signal de temps, mémorisé dans un quatrième registre (Reg4), qui correspond au temps de traitement d'une information de signalisation transmise par des tronçons de lignes du groupe mentionné en premier, et que le signal de temps qui en résulte, délivré par le multiplicateur, est appliqué à un soustracteur (SUB2) qui produit, d'après ce signal de temps et d'après le signal de temps délivré par le soustracteur (SUB1) du premier dispositif de commande (S1), un signal de temps, dèlivré au dispositif de sélection (AE), qui correspond au temps restant encore disponible pour le traitement d'autres informations de signalisation.

**Claims**

1. A method of controlling the processing of items of signalling information which are supplied to a teleprinter- and datas witching exchange (EDS) via line sections in order to establish connections and which are transmitted via line sections which are assigned to two different groups of line sections and on which different transmission procedures are handled, where the number of items of signalling information which are transmitted via the two groups of line sections and which can be processed within a predetermined interval of time is determined in the teleprinter- and data switching exchange, characterised in that in the teleprinter- and data switching exchange the items of signalling information which occur on the line sections are separately collected in accordance with whether they originate via line sections of the first group or line sections of the other group, that at least those items of signalling information which are transmitted via line sections assigned to the first group are stored prior to their processing, that the number of items of signalling information received by the teleprinter- and data switching exchange within a predetermined interval of time via line sections assigned to the other group of line sections is determined, that on the basis of this number, the time still available within such an interval of time for the processing of additional items of signalling information is determined, that within a predetermined interval of time of this kind, there are processed the determined number of items of signalling information transmitted via line sections assigned to the other group of line sections, and a number – corresponding to the specified time – of items of signalling information transmitted via line sections assigned to the aforesaid first group of line sections.

2. A circuit arrangement for implementing the method claimed in claim 1, characterised in that the teleprinter- and data switching exchange (EDS) includes an evaluator (BE) which allows the items of signalling information transmitted via the line sections to be separated in accordance with whether they have originated via line sections assigned to the first group of line sections or line sections assigned to the other group of line sections, that a storage arrangement (WF) is provided at least for the storage – prior to processing – of those items of signalling information transmitted via line sections assigned to the first group of line sections, that a first control device (S1) is provided which determines the number of items of signalling information received by the teleprinter- and data switching exchange within a predetermined interval of time via line sections assigned to the other group of line sections and which, on the basis of this number, determines the time still available within such an interval of time for the processing of further items of signalling information, and that a second control device (S2) is provided which, within a predetermined interval of time of this type, permits the processing of a number – corresponding to the determined number – of items of signalling information transmitted via the line sections assigned to the other group of line sections and a number – corresponding to the specified time – of items of signalling information transmitted via line sections assigned to the first group of line sections.

3. A circuit arrangement as claimed in claim 2, characterised in that the first control device (S1) includes a counter arrangement (Z1) which determines the items of signalling information received during the predetermined interval of time by the teleprinter- and data switching exchange via line sections assigned to the aforesaid other group of line sections, that the counter arrangement is connected to a first register (Reg1) for the emission of a counter signal which corresponds to this number of items of signalling information, that at its output end this register is connected to a multiplier (MUL1) which multiplies the counter signal, with which it is supplied, by a time signal which is stored in a second register (Reg2) and which corresponds to the processing time for an item of signalling information transmitted via line sections assigned to the other group of line sections, and that the time signal emitted by the multiplier is received by a subtractor (SUB1) which, from this time signal and from a time signal which is stored in a third register (Reg3) and which corresponds to the total length of time available within the predetermined time interval for the processing of items of signalling information, determines the time still available for processing of further items of signalling information and makes available to the teleprinter- and data switching exchange (EDS) a time signal corresponding to this time.

4. A circuit arrangement as claimed in claim 3, characterised in that for the forwarding of the items of signalling information transmitted via line sections assigned to the two groups of line sections, the second control device (S2) includes a selection device (AE) which receives a predetermined number of the items of signalling information stored in the storage arrangement (WF) whenever the time required for the processing of this number falls within the time still available for the processing of further items of signalling information, that in order that this time required for processing may be determined a counter arrangement (Z2) is provided, the count of which is changed whenever an item of signalling information stored in the storage arrangement is transferred into the selection device, that for the emission of a counter signal corresponding to its count, the counter arrangement is connected to a multiplier (MUL2) which multiplies this counter signal by a time signal which is stored in a fourth register (Reg4) and which corresponds to the processing time for an item of signalling information transmitted via line sections assigned to the aforesaid first group of line sections, and that the resultant time signal, emitted by the multiplier, is fed to a subtractor (SUB2) which, from this time signal and from the time signal emitted by the subtractor (SUB1) of the first control device (S1), supplies the selection device (AE) with a time signal which corresponds to the time still available for the processing of further items of signalling information.